Europäisches Patentamt

European Patent Office

Office européen des brevets

(19)

(11) Veröffentlichungsnummer: **0 251 220**
**A1**

# (12) EUROPÄISCHE PATENTANMELDUNG

(21) Anmeldenummer: **87109172.4**

(22) Anmeldetag: **26.06.87**

(51) Int. Cl.⁴: **B28D 1/26 , B23K 31/04**

(30) Priorität: **26.06.86 DE 3621414**

(43) Veröffentlichungstag der Anmeldung:
**07.01.88 Patentblatt 88/01**

(84) Benannte Vertragsstaaten:
**CH DE FR GB IT LI**

(71) Anmelder: **Hawera Probst GmbH + Co.**
**Schützenstrasse 77**
**D-7980 Ravensburg(DE)**

(72) Erfinder: **Haussmann, August**
**Gebhard-Fugel-Strasse 17**
**D-7981 Oberzell(DE)**

(74) Vertreter: **Patentanwälte Dipl.-Ing. E. Eisele**
**Dr.-Ing. H. Otten**
**Seestrasse 42**
**D-7980 Ravensburg(DE)**

(54) Bohrwerkzeug.

(57) Es wird ein Bohrwerkzeug für Hammerbohrmaschinen oder Schlagbohrmaschinen vorgeschlagen, welches zwei einstückige, eine Kreuzverbindung bildenden Schneidplatten (12, 13) aufweist. Um einem derartigen Bohrwerkzeug die für eine hämmernde Beanspruchung notwendige Festigkeit zu verleihen, werden die Einschnittiefen in den sich kreuzenden Schneidplatten sowie die Nuten (20, 21) im Bohrerkopf (25) derart bemessen, daß sich die Krafteinleitung der schlagenden Beanspruchung auf den Bohrerkopf (25) im wesentlichen über den Schlitzgrund der Nuten (20, 21) im Bohrerkopf (25) und nicht über die Endflächen der Schlitze (14, 15) in den sich kreuzenden Schneidplatten (12, 13) geführt wird.

Fig1b

Fig1a

EP 0 251 220 A1

Die Erfindung betrifft ein Bohrwerkzeug nach dem Oberbegriff des Anspruchs I.

Aus der DE-AI 30 25 890 ist ein Bohrer für Bohrhämmer insbesondere zum Bohren in Gestein, Beton o. dgl. bekannt geworden, der einen einstückigen Hartmetalleinsatz aus sich kreuzenden radialen Schenkeln aufweist. Gegenüber Bohrern mit nur einer linienförmig ausgebildeten Hartmetallschneide eignen sich derartige Bohrer mit kreuzweise verlaufenden Hartmetallschneiden zur Herstellung von besonders kreisrunden Bohrlöchern, insbesondere zur Anbringung von Schwerbefestigungsdübeln. Die bei Bohrwerkzeugen mit nur einer diagonal verlaufenden linienförmigen Schneide entstehenden Bohrlöcher sind im Querschnitt polygonförmig und genügen hohen Ansprüchen bei Spezialbefestigungen nicht.

Das in der oben genannten Druckschrift bekannte Bohrwerkzeug weist einen einstückigen, im Grundriß kreuzförmigen Hartmetalleinsatz auf, der im bekannten Herstellungsprozeß für Hartmetall, d. h. im Sinterverfahren hergestellt ist. Gegenüber der Herstellung von normalen linienförmigen Hartmetallschneiden verteuert sich die Herstellung bei einem derartigen, räumlich komplizierter aufgebauten Gegenstand beträchtlich. Darüber hinaus lassen sich die vertikalen Eckbereiche zwischen jeweils zwei benachbarten Schneidenschenkel nur als Abrundung, d. h. nicht scharfkantig ausbilden. Das Einsetzen eines derartigen einstückigen Hartmetalleinsatzes in den Trägerschaft muß deshalb in folgenden Schritten durchgeführt werden:

Zunächst muß eine mittige Zentrierbohrung hergestellt werden, deren Durchmesser um den Betrag gegenüber der Plattenstärke der Hartmetallschneide vergrößert ist, wie es dem Platzbedarf für die Abrundungen in den Eckbereichen zwischen den Schenkeln des einstückigen Hartmetalleinsatzes entspricht. Danach werden die zwei, sich vorzugsweise unter einem rechten Winkel - schneidenden Schlitze zur Aufnahme der radialen Schenkel des Schneideinsatzes in den Bohrerkopf gesägt. Dieser Herstellungsvorgang ist aufwendig und muß mit äußerster Präzision durchgeführt werden, damit der einstückige Hartmetalleinsatz in seiner genauen Lage fixiert ist. Dieser Herstellungsaufwand addiert sich zu den an sich teuren Herstellungskosten eines einstückigen Hartmetalleinsatzes mit kreuzförmigen Schneiden.

Zur Herstellung von Bohrwerkzeugen mit kreuzweise verlaufenden Hartmetallschneiden ist es aus der US 2 673 716 weiterhin bekannt geworden, eine über den Querschnitt des Bohrwerkzeugs durchgehende Hartmetallschneide in einen Schlitz einzusetzen, wobei das Kreuz durch zwei in einen Querschlitz eingesetzte kürzere Hartmetallschneiden gebildet wird. Die Breite der kurzen rechtwinklig zur Hauptschneide angesetzten Schneiden entspricht etwa grob dem halben Querschnittsdurchmesser des Bohrkopfs und wird derart bemessen, daß der Gesamtdurchmesser beider kurzen Schneiden dem Durchmesser der einstückigen Schneide entspricht. Der Herstellungsprozeß dieses Schneidkopfs geschieht dann wie folgt: Es werden zunächst die beiden sich rechtwinklig kreuzenden Schlitze zur Aufnahme der Schneiden in den Bohrerkopf gesägt. Sodann wird die über den ganzen Bohrerkopfquerschnitt sich erstreckende durchgehende Hauptschneide eingesetzt und die beiden kleineren rechtwinklig hierzu angeordneten Nebenschneiden in den Querschlitzen zentriert. Die Zentrierung der drei Hartmetallschneiden in den sich kreuzenden Schlitzen muß sehr sorgfältig vorgenommen werden, um eine Verschiebung beim nachfolgenden Lötvorgang zu vermeiden. Gegenüber dem einstückigen Hartmetalleinsatz wie oben beschrieben, hat diese Bauart den Vorteil, daß keine Zentrierbohrung zusätzlich angefertigt werden muß. Auch die Herstellung der Hartmetallschneiden ist wegen der einfachen Formgebung kostengünstiger.

Nachteilig an den zuvor beschriebenen Bohrwerkzeugen mit mehrteiligen, insbesondere dreiteiligen Kreuzschneiden ist die aufwendige Zentriermontage bei der Herstellung. Die Standfestigkeit derartiger Bohrwerkzeuge wird erheblich dadurch reduziert, daß die Hartmetallschneiden in ihrer Lage beim Herstellungsprozeß nicht genau fixiert sind.

Aus der US I I06 966 ist ein Bohrwerkzeug zur Bearbeitung von Stein, Zement o. dgl. als drehendes, nicht schlagendes Werkzeug bekannt geworden, bei welchem die Schneidplatten gemäß dem Oberbegriff des Anspruchs I ebenfalls als einstückige, sich kreuzende Schneidplatten mit ineinandergreifenden Nuten zur Bildung einer Kreuzverbindung ausgebildet sind. Diese Schneidplatten sind in einem Bohrerkopf lose über eine mechanische Verbindung gehalten, was keinesfalls für eine schlagende Beanspruchung des Bohrwerkzeugs geeignet wäre. Will man derartige einstückige Kreuzschneiden in einem Bohrerkopf gemäß der eingangs erwähnten DE 30 25 890 in einem Lötverfahren einsetzen, so ergeben sich erhebliche Probleme mit den Toleranzen der anzufertigenden Einzelteile bzw. der Schlitztiefen in den Schneidplatten und im Bohrerkopf, da die Schneidplatten entweder auf dem Schlitzgrund im Bohrerkopf oder die Hauptschneide auf der Nebenschneide aufliegt. Da schlagend beanspruchte Bohrwerkzeuge einer erheblichen Belastung der Schneidplatten ausgesetzt sind, ist die Anpassung der Einzelteile aufeinander sowie die Verbindungstechnik von entscheidender Bedeutung. Hierüber gibt die genannte Patentschrift US I l06 966 keinen Aufschluß.

Der Erfindung liegt die Aufgabe zugrunde, die vorgenannten Nachteile zu vermeiden und ein Bohrwerkzeug mit Kreuzschneide zu schaffen, welches gegenüber einstückigen Hartmetalleinsätzen niedrigere Herstellungskosten und einfachere Einbaubedingungen aufweist und gegenüber bekannten Bohrwerkzeugen mit mehrteiligen Hartmetallschneiden eine verbesserte Zentriermontage und damit höhere Herstellungspräzision erreicht. Weiterhin soll gegenüber Bohrwerkzeugen mit einstückigen Kreuzschneiden die Verbindungstechnik verbessert werden.

Diese Aufgabe wird ausgehend von einem Bohrwerkzeug der gattungsgemäßen Art durch die kennzeichnenden Merkmale des Anspruchs I gelöst.

Die vorliegende Erfindung verbindet auf vorteilhafte Weise die Präzision des einstückigen Hartmetalleinsatzes mit der einfachen Herstellbarkeit mehrteiliger Kreuzschneiden. Um jedoch die Zentriermontage von Einzelteilen in den sich kreuzenden Schlitzen zu vereinfachen, wird ein aus zwei Teilen bestehender Hartmetalleinsatz verwendet, der zusammengefügt selbstzentrierend ist, d. h. durch eine Verzahnung der Einzelplatten findet eine Eigenzentrierung des Hartmetallkreuzes statt. Die Verzahnung der beiden plattenförmigen Einzelteile geschieht durch eine Kreuzverbindung, d. h. eine nach unten gerichtete Nut des Hartmetall-Hauptschneidteils wirkt mit einer nach oben gerichteten Nut des Hartmetall-Nebenschneidteils zusammen, wobei beide Teile nach dem Ineinanderschieben der Nuten fest miteinander fixiert sind.

Durch diese an sich einfache und bekannte Verbindungsart der beiden sich kreuzenden Hartmetallschneiden werden einfache ebene Hartmetallplättchen mit billiger Herstellung verwendet. Die Montage wird durch die Selbstzentrierung erheblich reduziert und die Präzision des hergestellten Bohrwerkzeugs zuverlässig verbessert.

Durch die erfindungsgemäße Verbindung an sich bekannter Techniken, insbesondere durch Verwendung von einteiligen Kreuzschneiden in angepaßten Nuten im Bohrerkopf in Verbindung mit einer Lötverbindung wird ein außerordentlich einfach herzustellender und widerstandsfähiger Bohrerkopf für den Einsatz von Hammerbohrmaschinen o. dgl. geschaffen. Dabei ist es maßgeblich, daß sich die Schneidplatten stets am Schlitzgrund der Schlitze im Bohrerkopf abstützen und nicht in erster Linie im Schlitzgrund der Nuten zwischen den beiden Schneidplatten, um zu vermeiden, daß Hartmetallteile direkt aufeinander liegen. Würden die kreuzweise zusammengefügten Hartmetallschneidplatten direkt aufeinander liegen, so könnte es leicht zu einem Bruch der spröden Hartmetallplatten kommen. Das diesen Spalt ausfüllende Lot zwischen den ineinandergreifenden Nuten von Haupt-und Nebenschneide dient als Dämpfungsglied zwischen den Teilen.

Gemäß der Weiterbildung der Erfindung nach Unteranspruch 2 werden die Nuten der sich kreuzenden Hartmetallschneiden in ihren Abmessungen derart aufeinander angepaßt, daß sich die Haupt-Hartmetallschneide mit nach unten gerichteter Nut am Nutengrund der Neben-Hartmetallschneide nach dem Lötvorgang abstützt und so die -schlagene Beanspruchung an den Schlitzgrund im Bohrerkopf nur gedämpft weitergibt. Hierdurch berühren sich die aus sprödem Material bestehenden Haupt-und Nebenschneiden nur indirekt über das Lot. Vor dem Lötvorgang ist demnach ein Spalt vorhanden der mit Lot ausgefüllt wird.

Die Weiterbildung der Erfindung nach Unteranspruch 3 sieht vor, daß die Nuten zwischen den Hartmetall-Kreuzschneiden derart gefertigt sind, daß sich Lötspalte sowie am Nutengrund als auch an den Seitenwandungen einstellen.

Durch den Lötprozeß wird hierdurch aus der zweiteiligen Kreuzschneide eine einteilige Kreuzschneide mit entsprechender Kraftübertragung an die sie umgebenden Wandungen.

Gemäß der Weiterbildung der Erfindung nach Unteranspruch 4 können die Einzelelemente der beiden Hartmetallschneiden zur Bildung der Kreuzschneide aus unterschiedlichem Material bestehen. So kann beispielsweise die die Bohrerspitze bildende Hauptschneide aus einem polykristallinem Diamantmaterial mit noch härteren Materialeigenschaften bestehen, während die hierzu senkrecht stehende Nebenschneide nur aus Hartmetall-Material besteht.

Die Ausbildung der Erfindung nach den Unteransprüchen 5 und/oder 6 sieht vor, daß die Neben-Hartmetallschneide gegenüber der die Bohrerspitze bildenden Haupt-Hartmetallschneide axial zurückversetzt sein können, was zu einer Erhöhung der Belastung der Hauptschneide mit einem erhöhten Flächenanpreßdruck und damit zu einem höheren Bohrvorschub führt. Außerdem kann die Höhe der Schneiden und damit die Einbautiefe, d. h. die Schlitztiefe variiert werden. Hierdurch liegen die Querschnittsschwächungen durch die Schlitze im Schlitzgrund auf unterschiedlichen axialen Ebenen was zur Erhöhung der Bohrerkopffestigkeit führt. Mit der vergrößerten Lötfläche ist ebenfalls eine Festigkeitserhöhung verbunden.

Für die Erfindung ist es demnach wesentlich, ein Bohrwerkzeug für Hammerbohrmaschinen oder Schlagbohrmaschinen vorzuschlagen, welches zwei einstückige, eine Kreuzverbindung bildenden Schneidplatten aufweist. Um einem derartigen Bohrwerkzeug die für eine hämmernde Beanspruchung notwendige Festigkeit zu verleihen, werden die Einschnittiefen in den sich kreuzenden Schneidplatten sowie die Schlitze im Bohrerkopf derart bemessen, daß sich die Krafteinleitung der - schlagenden Beanspruchung auf den Bohrerkopf im wesentlichen über den Schlitzgrund der Schlitze im Bohrkopf und nicht über den Nutengrund der sich kreuzenden Schneidplatten geführt wird.

Weitere erfindungswesentliche Merkmale und Vorteile ergeben sich aus den nachfolgend anhand der Zeichnung näher erläuterten Ausführungsbeispielen. Es zeigen

Fig. la und lb die Einzelteile der eine Kreuzschneide bildenden Hartmetallschneiden,

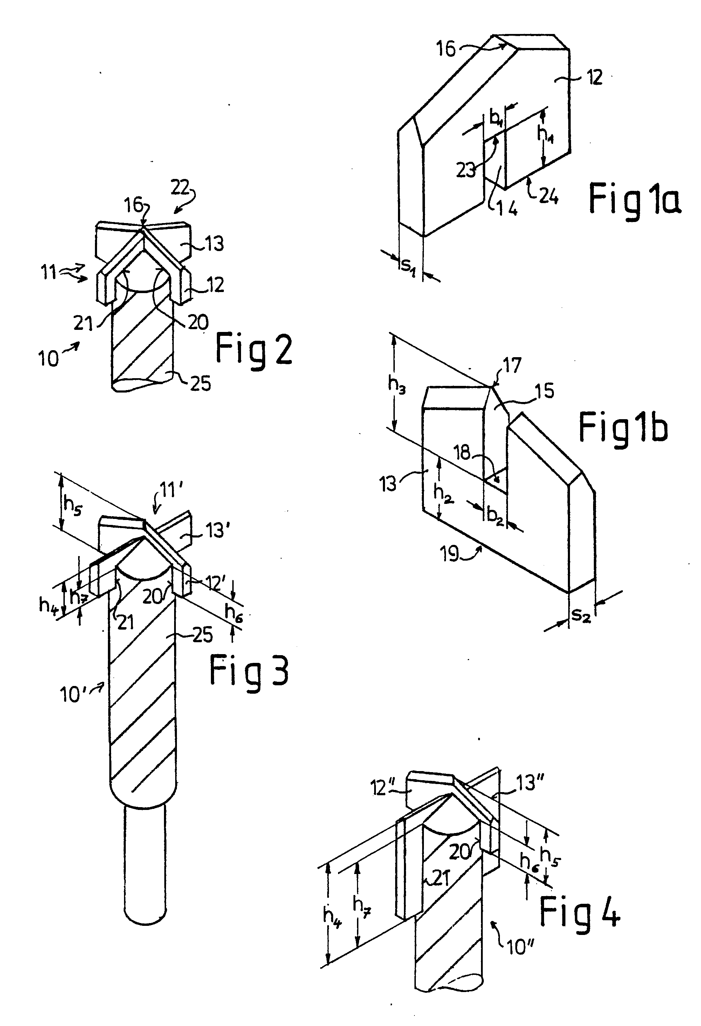

Fig. 2 bis 4 die Einzelschneiden nach Fig. la, lb in verschiedenen Variationen in eingebautem Zustand als Ausführungsbeispiele.

Das in der Fig. 2 schematisch dargestellte Bohrwerkzeug (l0) ist mit einer Kreuzschneide (ll) bestückt, die aus einer Haupt-Hartmetallschneide (l2) und einer Neben-Hartmetallschneide (l3) besteht. Die Haupt-Hartmetallschneide (l2) ist in Fig. la, die Neben-Hartmetallschneide (l3) in Fig. lb näher dargestellt. Die Verbindung beider Hartmetallschneiden erfolgt über eine Kreuzverbindung mittels der nach unten gerichteten Nut (l4) in der Haupt-Hartmetallschneide (l2) und der nach oben gerichteten Nut (l5) in der Neben-Hartmetallschneide (l3). Die beiden Nuten (l4, l5) sind derart ausgebildet, daß die Schneiden (l2, l3) rechtwinklig zueinander stehen und die oberen Spitzen (l6, l7) im zusammengebauten Zustand gemäß Fig. 2 fluchtend ausgebildet sind. Die oberste Kante (l7) der Nebenschneide (l3) liegt hierbei im allgemeinen geringfügig unter der obersten Erhöhung (l6) der Hauptschneide (l2). Die Hartmetallschneide (l2) mit nach unten gerichteter Nut (l4) und oberster Schneidspitze (l6) ist deshalb als "Hauptschneide", die Hartmetallschneide (l3) mit nach oben gerichteter Nut (l5) und etwas nach unten versetzter Spitze (l7) als "Nebenschneide" bezeichnet.

Die Nutenbreite ($b_1$) der Hauptschneide (l2) ist gleich der Wandstärke ($s_2$) der Nebenschneide (l3) zuzüglich einem Lötspalt bemessen. Das gleiche gilt für die Breite ($b_2$) der Nut (l5) der Nebenschneide (l3) mit einer Breite, die der Wandstärke ($s_1$) der Hauptschneide (l2) zuzüglich eines definierten Lötspaltes entspricht.

Die Höhe ($h_1$) der Nut (l4) der Hauptschneide (l2) entspricht der Höhe ($h_2$) zwischen dem Nutengrund (l8) und der Bodenfläche (l9) der Nebenschneide (l3) zuzüglich eines Spaltes zwischen den Flächen (l8, 23), der mit Lot ausgefüllt wird. Ebenso ist die Höhe ($h_3$) der nach oben gerichteten Nut (l5) derart bemessen, daß die Spitze (l7) der Nebenschneide mit der Spitze (l6) der Hauptschneide fluchtet.

Die Kreuzschneiden (l2, l3) sind derart miteinander als Kreuzverbindung zusammengefügt, daß diese Einzelplatten sich durch eine Eigenzentrierung verkeilen. Diese Selbstzentrierfähigkeit der zwei Einzelplatten ergibt beim Zusammenbau einen Körper, der sich wie ein einstückiger Hartmetalleinsatz verhält. Der Bohrkopf (22) des Bohrwerkzeugs (l0) wird mit zwei senkrecht zueinander verlaufenden Schlitzen (20, 2l) versehen, in die die beiden senkrecht zueinander stehenden Hartmetallschneiden (l2, l3) unter Berücksichtigung des notwendigen Montagespiels zur Herstellung der Lötverbindung eingelassen werden. Beim Lötvorgang werden sowohl die Schneiden (l2, l3) im Bereich ihrer miteinander verzahnten Nuten als auch die Schneiden (l2, l3) im Bereich der Schlitze (20, 2l) miteinander verlötet. Dabei muß gewährleistet sein, daß sich der Nutengrund (23) der Nut (l4) der Hauptschneide (l2) über die Lötverbindung und nicht über eine Direktberührung abstützt auf dem Nutengrund (l8) der Nebenschneide (l3). Gleiches gilt für die Verbindung zwischen den Wandungen der Nuten (l4, l5) mit den entsprechenden anliegenden Teilen. Durch diese Lötverbindung wird der Kraftfluß auf das ganze Kreuzschneidenteil (l2, l3) gelenkt, so daß sich dieses wie ein einstückiges Teil verhält. Besonders wichtig ist die Abstützung der Bodenfläche (24) der Hauptschneide (l2) und der Bodenfläche (l9) der Nebenschneide (l3) im jeweiligen Schlitzgrund (20, 2l) zur Weiterleitung der Schlagbeanspruchung in den Bohrerkopf.

Die radiale Länge jeder Schneidplatte (l2, l3) wird in an sich bekannter Weise ausgeführt.

Ein weiteres Ausführungsbeispiel der Erfindung ist in der Fig. 3 dargestellt. Hier ist die Nebenschneide (l3') in ihrer axialen Höhe ($h_4$) kleiner ausgeführt als die Höhe ($h_5$) der Hauptschneide (l2'). Durch die geteilte Ausführungsform von Haupt-und Nebenschneide kann jedes gewünschte Verhältnis der Höhen der Schneiden zueinander gewählt werden. Dabei sind in Fig. 3 die Schlitztiefen ($h_6$, $h_7$) der Schlitze (20, 2l) gleich tief ausgeführt. Durch die axial zurückversetzte Nebenschneide kann das Schneidverhalten des Bohrwerkzeugs (l0') in bestimmten Anwendungsfällen variiert und insbesondere die Belastung der Hauptschneide beeinflußt werden.

Im Ausführungsbeispiel nach Fig. 4 ist das Bohrwerkzeug (l0'') mit einer Nebenschneide (l3'') versehen, die in ihrer axialen Höhe ($h_4$) deutlich größer ausgebildet ist, als die Höhe ($h_5$) der Hauptschneide (l2''). Dies hat vor allem zur Folge, daß die Schlitztiefe ($h_7$) des Schlitzes (2l) für die Nebenschneide (l3'') ebenfalls deutlich größer (Faktor 2 bis 4) ausgebildet ist, als die Schlitztiefe ($h_6$) des Schlitzes (20) der Hauptschneide (l2''). Bei diesem Bohrwerkzeug (l0'') ist deshalb der Schlitz-

grund der Schlitze (20, 2l) auf axial unterschiedlichen Höhen des Bohrwerkzeugs angeordnet. Die Querschnittsschwächung durch die Schlitze (20, 2l) ist damit axial unterschiedlich verteilt. Weiterhin führt die vergrößerte Schlitztiefe ($h_7$) zu einer stark vergrößerten Lötfläche an den Seitenwandungen der Schneide und damit zu einer Erhöhung der Festigkeit der Lötverbindung.

Die in den Figuren 3 und 4 angestellten Betrachtungen für die unterschiedlichen Höhen ($h_4$, $h_5$) der Schneiden (l2, l3) sowie die unterschiedlichen Schlitztiefen ($h_6$, $h_7$) der Schlitze (20, 2l) können auch durch Austauschung der Begriffe Haupt-und Nebenschneide angewandt werden. Dies kann in Sonderfällen zu verbesserten Ergebnissen führen.

Den Ausführungsbeispielen nach Fig. 2 bis 4 ist es gemeinsam, daß gleichermaßen die Hartmetallschneiden (l2, l3) als durchgehende einstückige Hartmetallschneiden zur Bildung einer Kreuzschneide ausgebildet sind, wobei die Haupt-Hartmetallschneide eine nach unten gerichtete Nut und die Neben-Hartmetallschneide eine nach oben gerichtete Nut aufweist, die analog zur Darstellung in den Figuren la und lb zusammengesetzt sind.

Die in den Figuren 2 bis 4 dargestellten Schneiden (l2, l3 bzw. l2', l3' bzw. l2", l3") können auch jeweils aus unterschiedlichem Material beschaffen sein. So kann die Hauptschneide (l2, l2', l2") beispielsweise aus einem polykristallinem Diamant-Material (PKD-Material) oder aus einem Mateial aus kubischem Bohrnitrit (CBN) gefertigt sein, während die Nebenschneide (l3, l3', l3") aus weniger hartem Hartmetallmaterial bestehen kann. Beide Schneiden im Werkzeug (l0, l0', l0") können jedoch auch vollständig aus dem noch härteren Material bestehen.

Der eingeschlossene Winkel zwischen den Schneiden (l2, l3) kann in Sonderfällen abweichen vom Winkel von 90°, so daß sich jeweils zwei stumpfe und zwei spitze Winkel ergeben.

## Ansprüche

l. Bohrwerkzeug für Hammerbohrmaschinen, mit zwei einstückigen, eine Kreuzverbindung bildenden Schneidplatten aus Metall, die mittels ineinandergreifenden Nuten als Kreuzschneiden in die sich kreuzenden Schlitze im Bohrerkopf einsetzbar sind, dadurch gekennzeichnet, daß die Kreuzschneiden (ll) mittels einer Lötverbindung in den Schlitzen (20, 2l) des Bohrerkopfes (22) befestigt sind, wobei sich die Haupt-und Nebenschneiden (l2, l3) der Kreuzschneiden (ll) mit ihren Bodenflächen (24, l9) am Schlitzgrund der Schlitze (20, 2l) im Bohrerkopf (22) abstützen und wobei vor dem Lötvorgang ein definierter Spalt zwischen dem Nutengrund (23) der Hauptschneide (l2) und dem Nutengrund (l8) der Nebenschneide (l3) vorgesehen ist.

2. Bohrwerkzeug nach Anspruch l, dadurch gekennzeichnet, daß die Einschnitthöhe ($h_1$) der Hauptschneide (l2) und die Einschnitthöhe ($h_3$) der Nebenschneide (l3) derart bemessen sind, daß sich die Hauptschneide (l2) mit nach unten (zum Bohrerschaft 25) gerichteter Nut (l4) am Nutengrund (l8) der Nebenschneide (l3) nach dem Lötvorgang abstützt.

3. Bohrwerkzeug nach Anspruch l, dadurch gekennzeichnet, daß zusätzlich zur Lötverbindung der Kreuzschneiden (ll) in den Schlitzen (20, 2l) des Bohrerkopfes (22) Lötspalte zwischen den Nuten (l4, l5) der Schneidplatten (l2, l3) sowohl am Nutengrund (l8, 23) als auch an den Seitenwänden der Nuten vorgesehen sind.

4. Bohrwerkzeug nach Anspruch l, dadurch gekennzeichnet, daß die Schneidplatten (l2, l3) aus gleichem oder unterschiedlichem Material bestehen, insbesondere daß Material aus Hartmetall, polykristallinem Diamant und Material aus kubischem Bohrnitrit Verwendung finden.

5. Bohrwerkzeug nach Anspruch l, dadurch gekennzeichnet, daß die Nebenschneide (l3', l3") gegenüber der Hauptschneide (l2', l2") axial zurückversetzt ist, wobei gleiche oder unterschiedliche axiale Höhen ($h_4$, $h_5$) der Schneiden (l2', l2", l3', l3") mit gleichen oder unterschiedlichen Schlitztiefen ($h_6$, $h_7$) der Schlitze (20, 2l) verwendet sind (Fig. 3, 4).

6. Bohrwerkzeug nach Anspruch l, dadurch gekennzeichnet, daß die Nebenschneide (l3, l3', l3") in gleicher axialer Höhe gegenüber der Hauptschneide (l2, l2', l2") oder gegenüber dieser axial zurückversetzt ist, und daß die Schlitztiefe ($h_7$) der Nebenschneide (l3") größer ist als die Schlitztiefe ($h_6$) der Hauptschneide (l2").

Fig 2

Fig 1a

Fig 3

Fig 1b

Fig 4

| | EINSCHLÄGIGE DOKUMENTE | | EP 87109172.4 | |
|---|---|---|---|---|
| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) | |
| Y | US - A - 1 106 966 (PAULI) <br> * Fig. 8 * <br> -- | 1 | B 28 D 1/26 <br> B 23 K 31/04 | |
| Y | GB - A - 13.399/A.D. 1905 (WILLIAMS) <br> * Seite 1, Zeilen 24-28 * | 1 | | |
| A | | 2,5,6 | | |
| | -- | | | |
| Y,D | US - A - 2 673 716 (AVERY) <br> * Fig. 3,7 * <br> -- | 1 | | |
| A | EP - A1 - 0 141 195 (SIKU) <br> * Fig. 1 * <br> -- | 3 | | |
| A | WO - A1 - 85/02 442 (GRAESSLE) <br> * Gesamt * <br> ---- | 5,6 | RECHERCHIERTE SACHGEBIETE (Int. Cl.4) <br><br> B 23 B <br> B 23 K <br> B 25 D <br> B 28 D <br> E 21 C <br> E 21 D | |

Der vorliegende Recherchenbericht wurde für alle Patentansprüche erstellt.

| Recherchenort | Abschlußdatum der Recherche | Prüfer |
|---|---|---|
| WIEN | 21-09-1987 | GLAUNACH |